## Europäisches Patentamt

## European Patent Office

## Office européen des brevets

(19)

(11) Publication number: **0 040 412**
**B1**

(12) **EUROPEAN PATENT SPECIFICATION**

(45) Date of publication of patent specification: **04.04.84**

(51) Int. Cl.³: **H 04 Q 3/54**

(21) Application number: **81103736.5**

(22) Date of filing: **15.05.81**

(54) **Intelligent and programmable peripheral equipment for the asynchronous management of sensors and drivers in a telecommunication network.**

(30) Priority: **19.05.80 IT 6778380**

(43) Date of publication of application:
**25.11.81 Bulletin 81/47**

(45) Publication of the grant of the patent:
**04.04.84 Bulletin 84/14**

(84) Designated Contracting States:
**DE FR GB NL SE**

(56) References cited:
DE - A - 2 813 016
FR - A - 2 342 611
US - A - 3 974 343

INTERNATIONAL SWITCHING SYMPOSIUM
May 7-11, 1979, Paris Comité du C.I.C. Paris, FR
P. MURCHIO: "Upgrading of Electromechanical
switching systems in Italy by introducing
computerbased active management", pages
789-794
EUROCON 77, May 3-7, 1977, Venezia IEEE New
York, US G. LOBISCH et al.: "Intelligent units as
interface between telecommunication system
and minicomputer", pages 3.5.5.1 - 3.5.5.7
ELECTRONICS & POWER, vol. 23, no. 10,

(73) Proprietor: **CSELT Centro Studi e Laboratori
Telecomunicazioni S.p.A.**
**Via Guglielmo Reiss Romoli, 274**
**I-10148 Turin (IT)**

(72) Inventor: **Ame, Gioachino**
**V. Palma di Cesnola, n. 36**
**Torino (IT)**
Inventor: **De Micheli, Spiridione**
**Via Tiziano, No. 2**
**Pescara (IT)**
Inventor: **Rullent, Claudio**
**V. Garibaldi, 66**
**Alpignano Torino (IT)**

(74) Representative: **Riederer Freiherr von Paar zu
Schönau, Anton et al,**
**Freyung 615 Postfach 2664**
**D-8300 Landshut (DE)**

(56) References cited:
October 1977, IEE Hitchin Herts, GB C.J.
HUGHES: "Computer Control of Switching",
pages 806-811
1974 IEEE INTERCON TECHNICAL PROGRAM
PAPERS, IEEE New York, US G.E. FRIEND:
"Selection Criteria for Minicomputers
Controlling Communications Switching
Systems" pages 1-5

Courier Press, Leamington Spa, England.

## Intelligent and programmable peripheral equipment for the asynchronous management of sensors and drivers in a telecommunication network

The invention relates to an intelligent and programmable peripheral equipment for the asynchronous management of sensors and drivers in a telecommunication network, which equipment constitutes the two lower levels of a processing system organized in at least three hierarchical levels, picks up from an exchange signals generated during the network operation and returns other signals to the exchange as a result of the processing of the signals picked up, comprises a plurality of units of a first type constituting the lowest hierarchical level, designed to manage a number of said sensors and drivers, and further comprises one or several units of a second type constituting the one but lowest hierarchical level, each second type unit being associated to the plurality of the first type units, following the development of the network operation on the basis of the data which were supplied by the first type units and represent state variations in the signals picked up from the exchange, and sending to the first type units data and commands relative to the driver actuation and to a higher-hierarchy processing centre through a serial line to which second type units of a plurality of similar equipments are connected the basic states of the process.

The supervised "process" will generally be the setting up of a connection between two points of the network; the connection can be real (i.e. a connection between two subscribers) or simulated (test connection inside an exchange e.g. for diagnostic purposes).

When data represented by signalling criteria of a telecommunications network are to be processed, two problems, closely linked together are encountered, the first one relating to the dialog (i.e. data transmission) between the periphery (exchange devices, sensors and drivers) and the processing system, the second one relating to optimum exploitation of the processing power of said system.

As to the dialog between periphery and processing system, attention must be focussed on the fact that generally sensors and drivers are placed near the devices from which the criteria are to be picked up or to which the criteria are to be returned, while the processing unit (that may consist of a main processor and a preprocessor) is placed at a distance from such devices. Therefore if a space division connection is desired a lot of wires are to be installed between the processor and the periphery, what is not advisable from the practical and economic standpoints. if on the contrary a time-division transmission is desired, and the periphery is then equipped with multiplexing-demultiplexing means allowing the dialog by means of synchronous serial frames (that is with a time interval for each sensor or driver), a large amount of data are to be transmitted within a short time. This presents technical problems as a sophisticated technology will be required for synchronization, protection against noises, etc., and the use of a sophisticated technology obviously affects installation costs. Whatever the choice, it is to be borne in mind that the data supplied by the sensors cannot be utilized as such, but an integration at least is to be effected to discriminate the actual state transitions from noises. This integration that according to the prior art is performed by the centralized processing system, requires a cyclical scanning of all wires (or a reading of all frames), the storage of the results for a certain number of scanning or reading cycles, the comparison of the state ascertained at each new scanning or read operation with the stored states to distinguish a stable (i.e. actual) variation from a fortuitous variation due to a noise. These trivial tasks entail a heavy processing load by the centralized system and are detrimental to more sophisticated processings.

Driver management causes the same waste of processing power for trivial tasks; in fact for each driver the actuation and release commands must be sent to the periphery, with consequent heavy occupation of the connection lines mainly when the actuation of a command is to be periodically performed.

It is further known (International Switching Symposium, May 7—11, 1979, Paris Comité du C.I.C., pages 789—794) to use at the lowest level multiplexers, i.e. non-intelligent units. Such non-intelligent lowest level causes a very heavy flow of non-significant information to the higher levels, which flow requires pre-processing before being transferred to the actual processor. To this purpose, the second hierarchy system is based on minicomputer equipment.

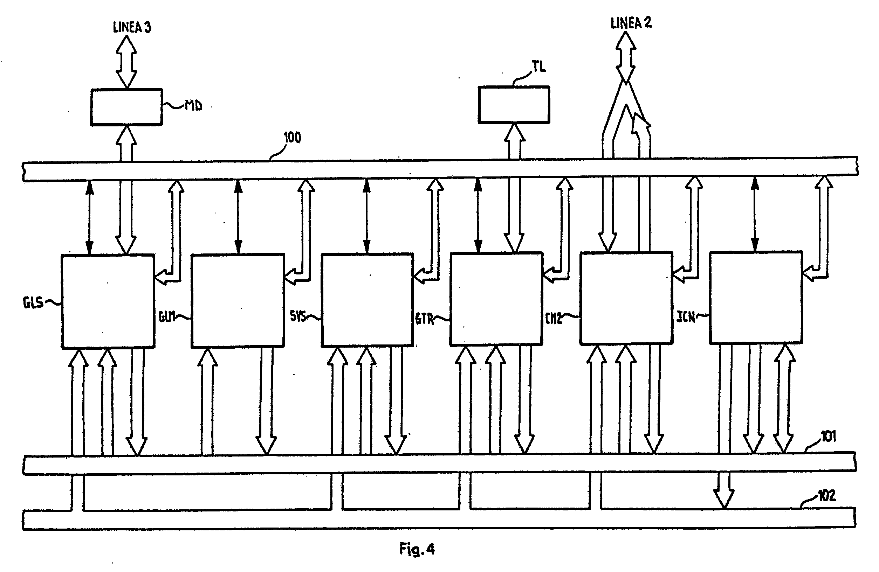

By a several-level processing system for a telecommunications network, partly peripheral processing has become known (Electronic & Power, Vol. 23, No. 10, October 1977, Hughes, pages 806 to 811 (Fig. 4)), wherein some peripheral processing is carried out by microprocessors which implement the two lowest levels of the three-hierarchy-processing system. However, implementing a peculiar organization of the parts of the system causes still considerable difficulties. A three-level-processing system has also become known for synchronous operation (FR—A 2 342 611). However, the tasks of the units of the different levels in this prior art are rather limited.

The invention is to solve the problems caused by the use of a partially decentralized processing system for managing sensors and drivers so that the respective lower hierarchy processing levels can distinguish between proper and spurious signals and can autonomously decide what operations to perform on the periphery, dependent on the state of certain sensed signals.

This problem is solved by the invention which is characterized in that each unit of the first type is designed to manage its sensors and drivers by the following functions: picking up signals from sets of the sensors at instants established by the unit itself and depending of the nature of the signals, processing, in a given operation phase, only the signals actually of interest for that phase, communicating to the second type unit the state variations of some of the signals picked up from the sensors, as soon as said variations are recognized, or the states of some of the signals picked up from the sensors upon request by the second type unit, and sending control signals to individual drivers or sets of drivers upon information and/or commands arriving from the unit of the second type; and that the unit of the second type: is designed to send to the first type units data and commands relating to the actuations, in dependence on messages coming from said higher hierarchy processing centre or the internal processing; is connected to each of the first type units through a serial line allowing a full-duplex asynchronous communication between the two units: in the direction from the first type unit toward the second type unit "at interrupt", and in the opposite direction at "sense-line"; carries out the dialog with the higher-hierarchy processing centre via the serial line by a "polling-selection-procedure".

The provision of intelligent units also at the lowest level allows the data flow at the input of the upper level to be limited to more significant information which is sent in the most suitable form for processing in the upper level. In this way the tasks of the upper level are simplified, and the dialog between the periphery and the centralized processing system may be strongly reduced, as the processing system intervenes only when the periphery is unable to face a situation: that is the centralized system is entrusted with just the most important tasks. The dialog in polling-selection between the peripheral equipment and the higher hierarchy centre allows the connection of a plurality of the units of the second type to the same line.

The foregoing and other characteristics of the present invention will be made clearer from the description of a preferred embodiment thereof given by way of non limitative example and shown in the annexed drawings, in which:

—Fig. 1 is a block diagram of the invention that shows also the connection thereof to a telephone exchange on one side and to a remote processing centre on the other side;
— Fig. 2 is a block diagram of a first type of unit used in the invention;
— Fig. 3 is a block diagram of the second type of unit used in the invention;
— Fig. 4 is a diagram of the program organization of the second type of unit and

— Fig. 5 is a qualitative diagram of a number of signals to be picked up or returned in a particular application of the invention.

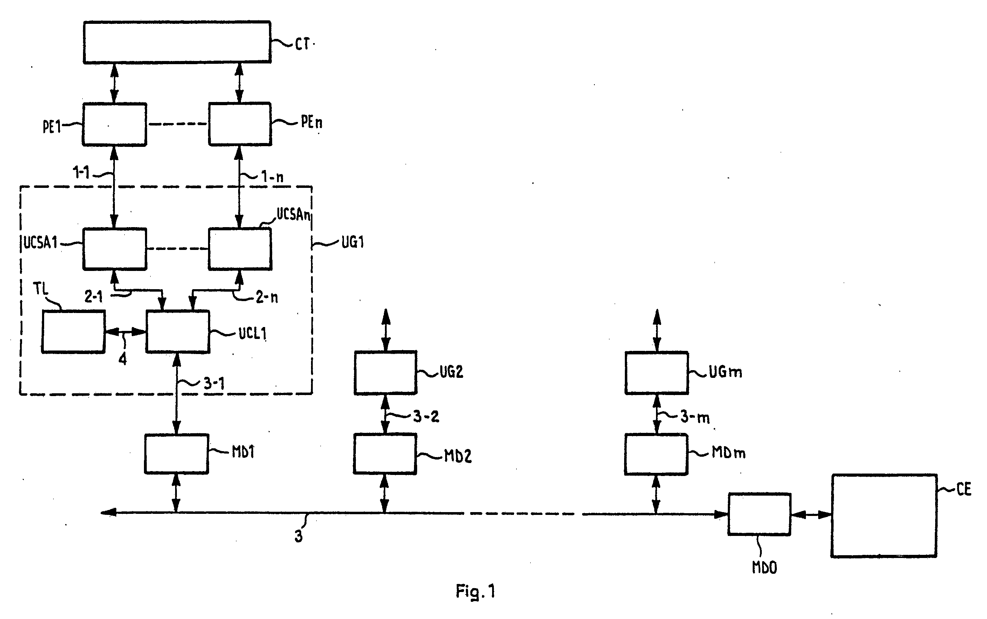

In Fig. 1, a telephone exchange CT is associated with a plurality of sensors and drivers (schematically represented by blocks PE1 ... PEn) for picking up the criteria to be processed and for returning the exchange other criteria, as a result of the processing executed.

Each block PE1 ... PEn of sensors and drivers is associated with a corresponding unit UCSA1 ... UCSAn for the control of sensors and drivers, and all the units UCSA1 ... UCSAn are connected to a unit UCL1. Units UCSA and unit UCL1 have processing capability and form together the equipment according to the invention, denoted by UG1.

Units UCSA1 ... UCSAn, which are connected to the corresponding blocks PE through connections 1-1 ... 1-n, are to pick up in asynchronous way the output signals of the sensors, to perform the logic integration of said signals to eliminate noises, and to communicate a sensor state or the state transitions to unit UCL1; in opposite direction, they will receive from UCL1 the information relating to the drivers to be controlled and the driving modalities. The dialog is carried out on serial lines 2-1 ... 2-n, in full duplex. To reduce the processing load required by the integration, units UCSA will store information relating to the sensors which, during a certain phase of the process to follow, pick up from the exchange signals whose transitions are actually significant, and to the periodicity of scanning of such sensors; the information on the state of the signals read will be transmitted to unit UCL1 upon request of the latter, or, for certain signals, as soon as a state change occurs.

As to the driver actuation, units UCSA1 ... UCSAn can effect both immediate actuations (i.e. they can send the relative criterion as soon as they receive the command from UCL1) and deferred actuations, for which units UCSA1 ... UCSAn receive from UCL1 first the information on the identity of the drivers to be actuated, and then the actuation command.

Unit UCL1 must follow the development of the supervised process (in particular a plurality of telephone calls) by using the data supplied by units UCSA1 ... UCSAn and its programs, communicate the essential state of the process to a processing centre CE and, on the basis of messages of such a centre, send units UCSA data and commands relating to the actuations.

The dialog between the processing centre and UCL1 is carried out in half duplex (i.e. it is unidirectional instant by instant) through a serial line 3, to which equipment UG1 is connected through line 3-1 and modem MD1; to line 3 there are connected, through lines 3-2 ... 3-m and modems MD2 ... MDm, other equipments UG2 ... UGm for the asynchronous management of sensors and drivers, slaved to the same processing centre CE; this is in turn connected to line 3 through modem MD0.

The dialog between processing centre CE and units UCL of equipments UG1 ... UGm is carried out according to a procedure known as "polling selecting", that is centre CE polls the various units UCL to know whether they have something to transmit or, reversely it orders a particular unit to carry out a determined operation.

Unit UCL1 is also connected, through a serial line 4, to a local terminal TL (teleprinter, video) which allows the direct dialog with the processing centre CE and the transmission of commands or the request for states to unit UCL1 in real time. Also the dialog between UCL1 and TL is carried out in full-duplex.

Advantageously, to the purposes of management by equipment UG1, the sensors and drivers in blocks PE are organized in matrices, preferably with rows of 8 sensors or drivers, and each read out from the sensors will concern a whole row of a matrix, while the actuation can concern also individual drivers. The total number of sensors and drivers that can be controlled by a single unit UCSA and the number of units UCSA that can be controlled by unit UCL1 will obviously depend on the nature of the processings to be effected by the two types of units. For instance, a unit UCSA can control 1024 sensors and the same number of drivers, and unit UCL1 can control two units UCSA. The following detailed description relates to this particular case.

Owing to the presence of intelligent peripheral equipments UG, the periphery is entrusted with the more trivial and repetitive operations, such as integration of sensed signals and driving of other signals, while processing centre CE is a higher-hierarchy centre entrusted only with the most sophisticated tasks.

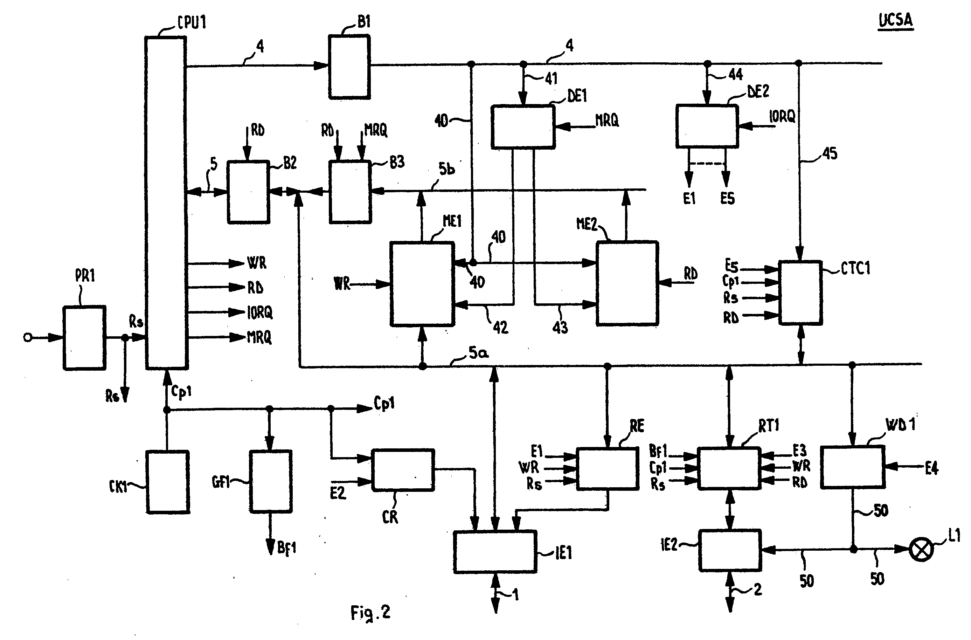

Fig. 2 shows that a unit UCSA essentially consists of a microcomputer and of the circuits for the dialog with the periphery and with unit UCL1.

The microcomputer comprises a central processing unit CPU1, such as unit Z80 manufactured by Zilog, a random access memory ME1 for the data, a programmable and erasable read-only-memory ME2 for the programs, a memory decoder DE1, an input-output decoder DE2, an address bus 4 on which a buffer B1 is inserted, a data bus 5 on which transceiver (bidirectional buffer) B2 is inserted and into which bidirectional bus 5a and a bus 5b for read in the memory join; on bus 5b a further buffer B3 is connected.

The random-access memory is to memorize the states of the sensors, resulting from the processing carried out by CPU1 (in particular, the last detected state, the bits indicating the number of integration steps, and the presence or absence of variations with respect to the detected state) and the replica of driver conditions. Memory ME2 is to store the programs for the integration of the signals coming from the sensors, the actuation programs, and the programs for the dialog with unit UCL1. As to the programs of integration and dialog with UCL1, ME2 will store the information relating to the sensors actually connected to exchange devices (so as to avoid useless integrations), to the sensors connected to wires whose state variations are to be immediately communicated to unit UCL1, and to the periodicity of sensor scanning.

The addresses for the operations in memories ME1, ME2 are supplied by unit CPU1: the least significant part of each address (e.g. 11 bits) is directly sent to the memory, through wires 40 of bus 4; the most significant part (3 bits), present on wires 41 of bus 4, is decoded in DE1 and sent to ME1 through wires 42 and to ME2 through wires 43. Decoder DE1 is enabled by signal MRQ, supplied by CPU1, whenever a memory operation is requested. The write command for ME1 and the read command ME2 are supplied by unit CPU1 (signals WR, RD); as usual, the absence of the write command during an operation will be interpreted in ME1 as read command. Read command RD together with the request MRQ for a memory operation enables buffer B3 to let through the signals present on bus 5b; this is necessary to avoid the simultaneous presence on bus 5 of data to be written or data read, which could occur owing to the type of command in ME1. The same signal RD enables B2 to let through the data directed to CPU1.

The information is picked up from the sensors and the commands are sent to the drivers through data bus 5a, which is connected to line 1 through an electrical interface IE1, consisting of line receivers and line drivers of the open-emitter type with resistive terminations depending on the line length.

As mentioned, sensors and drivers management is asynchronous, therefore unit UCSA must every time address the matrix row to be sensed or controlled; also the addresses are supplied by CPU1, through buses 5, 5a and a parallel-to-parallel register RE, that keeps each address present until CPU1 sends the subsequent address.

Since 1024 sensors and as many drivers organised into 8-bit rows have been considered, the addressing of a row will require 8 bits, of which one can be used to distinguish whether the row comprises sensors or drivers.

Register RE is enabled by a signal E1 emitted by decoder DE2 that receives the first three bits of the less significant part of the memory addresses and is enabled by a signal IORQ, emitted by processing unit CPU1 and indicating that an operation relating to sensors or drivers is to be executed.

The actual bit loading into RE takes place upon command of signal WR; the transfer onto line 1 will occur through a number of the line drivers in interface IE1.

To control the operations of the drivers also a timing circuit CR is provided that causes the data to be loaded into the drivers with a predetermined delay with respect to their presence on bus 5a, so as to ensure the driver matrix that the data to be written are valid. Circuit CR can basically consist of a shift register with a length presettable according to the required delay. It is enabled by a signal E2 supplied by DE2 and is controlled by periodic signal Cp1, that is supplied by clock generator CK1 and represents the fundamental clock signal for the operations of unit UCSA. Also CR is connected to line 1 through interface IE1.

For the dialog of unit UCSA with unit UCL1 a USART (universal-synchronous-asynchronous receiver-transmitter) transceiver RT1 is provided; RT1 is asynchronously programmed by CPU1 and is connected on one side to bus 5a and on the other side to lines 2, through an electrical interface IE2 of the RS232 type.

For its operation, transceiver RT1 receives an enable signal E3 from DE2, signal Cp1 from generator CK1, write and read commands WR, RD from CPU1 and a signal Bf1 that indicates the frequency of reception and transmission on line 2 and is supplied by a generator GF1 controlled by signal Cp1.

Interface IE2 can be disabled by a signal emitted on a wire 50 by a "watch dog" circuit WD1 whenever CPU1 does not request access to circuit WD1 for a pre-determined time: the disabling of IE2 prevents line 2 from being permanently seized due to a failure in UCSA. Wire 50 is also connected to a warning light L1. Circuit WD1, enabled by a signal E4 generated by DE2, can consist, for instance of a monostable element periodically switched by the access request sent by CPU1 through bus 5a.

A timing and counting circuit CTC1 is also connected to bus 5a; CTC1 sends interrupt signals to CPU1 every time one or more time meterings, preset by CPU1, are over; these time meterings are related with the scanning periodicities of given sensors. Advantageously CTC1 is capable of supplying four time constants, selected by means of two bits in the memory address (wires 45 of bus 4). For its operation, CTC1 receives an enable signal E5 from DE2, signal Cp1 from CK1 and read command RD from CPU1.

Finally a reset circuit PR1 resets, by means of signal RS, processing unit CPU1, register RE, transceiver RT1 and circuit CTC1 whenever device UG1 is operated or upon manual command.

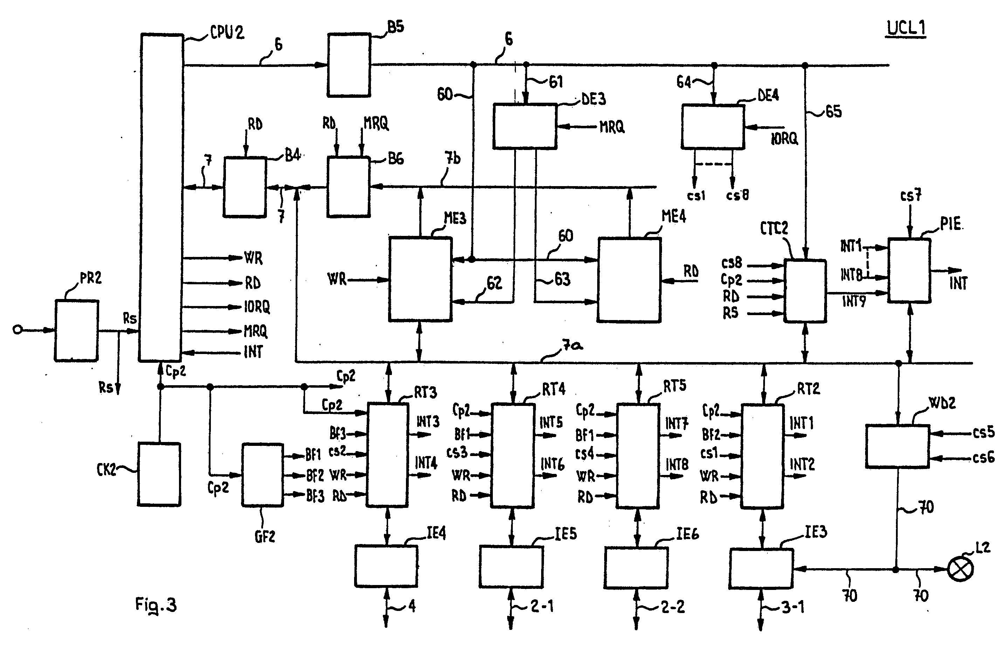

With reference to Fig. 3, unit UCL1 also comprises a microcomputer and the circuits for the dialog with units UCSA1, UCSA2, processing centre CE and local terminal TL.

The microprocessor is identical to that of units UCSA, and comprises processing unit CPU2, memories ME3, ME4, decoders DE3, DE4, buses 6, 7, 7a, 7b (with buffers B4, B5, B6); said elements have the same functions as elements CPU1, ME1, ME2, DE1, DE2, 4, 5, 5a, 5b, B1, B2, B3 of Fig. 2. As in units UCSA, memories ME3, ME4 receive the less significant part of the addresses directly, through wires 60 of bus 6, and the more significant part through outputs 62, 63 of decoder DE3 which decodes the three most significant bits, present on wires 61. Decoder DE4, in turn, decodes three address bits, present on wires 64 of bus 6 and generates eight enable signals cs1 ... cs8.

Unit UCL1 further comprises reset circuit PR2, clock generator CK2, that generates signal Cp2, and generator GF2 of transmission frequencies Bf1, Bf2, Bf3; these devices are similar to devices PR1, CK1, GF1 of Fig. 2.

For the dialog with the periphery, transceivers RT2, RT3, RT4, RT5 are provided, which are similar to RT1 (Fig. 2) and are connected through electrical interfaces IE3, IE4, IE5, IE6, respectively to modem MD1 (line 3-1), to local terminal TL (line 4) and to the two units UCSA slaved to UCL1 (lines 2-1, 2-2). Transceivers RT2—RT5 receive, like RT1, signals WR, RD, Cp2, their respective enable signals $cs_1 \ldots cs_4$ generated by the input/output decoder DE4, and their respective transmission frequencies (Bf1 for RT4, RT5, Bf2 for RT2 and Bf3 for RT3). Furthermore they emit "data ready" signals (INT1, INT2 ... INT7, INT8), relative to the transmission or the reception, which are supplied to an interrupt priority encoder PIE, of known type, that receives also a "data ready" signal INT9 from a circuit CTC2, similar to CTC1. Circuit PIE is enabled by a signal cs7 coming from DE2, emits towards CPU2 a signal INT which is the OR of signals INT1 ... INT9 and presents on bus 7a, upon request by CPU2, the coding of the highest-priority signal.

Interface IE3 that connects unit UCL1 to modem MD1 receives through wire 70 a disable signal from a "watch dog" circuit WD2; WD2 is implemented in a way similar to WD1 (Fig. 2), however, it receives two enable signals $cs_5$, $cs_6$ from DE2, for a greater safety.

In fact a failure in a unit UCL causing a permanent seizure of line 3 (Fig. 1) by the unit itself would prevent higher hierarchy centre CE1 from accessing units UCL: the use of two enable signals emitted in different program steps eliminates the danger that, due to a failure, the program never passes through the step relevant to the control of WD2.

This was not required for circuit WD1 (Fig. 2) as line 2 is devoted to the dialog between that unit UCSA and the corresponding unit UCL, and therefore its permanent seizure does not present the same disadvantages as the permanent seizure of line 3.

Finally, device CTC2, analogous to CTC1, supplies unit CPU2, through bus 7a, with 4 different time constants, selected upon two bits of the memory address. The address and control signals are analogous to those received by CTC1 (two address bits through wires 65 of bus 6, clock signal Cp2, enable signal cs8, read command RD and reset command Rs).

The operation of the invention will be described considering for sake of simplicity a device consisting of a single unit UCSA and of unit UCL1.

In the initialization phase the information relating to the sensors corresponding to signals to integrate, to sensors corresponding to signals whose state transitions must be communicated to UCL1 as soon as they occur, and to the periodicity of interrogation of such sensors are stored in UCSA; given periphery state is stored in UCL1. Therefore, at the beginning of the operation, unit UCL1 sends UCSA the addresses corresponding to certain sensors and drivers and the command to communicate the same unit UCL1 the states present in memory ME1 (Fig. 2) for said sensors and drivers. UCL1, upon receiving said states, compares them with the assumed initial states; if the states are different, UCL1 communicates the differences to local terminal TL (Fig. 1) and to higher-hierarchy centre CE so that they might act consequently.

If the assumed initial configuration is found to be identical to the actual one, equipment UG1 is ready to operate normally. Unit UCSA interrogates according to its programs the various sets of sensors with the periodicities established during the initialization phase and integrates the data read.

Integration is performed so that a state transition is actually recognized when it is maintained for four subsequent interrogations.

As soon as a state variation has been detected for one of the signals whose variations are to be automatically communicated to unit UCL1 by unit UCSA, the corresponding information is transmitted to UCL1; UCL1 interprets the meaning of the received information, checks whether the new state has been foreseen in the process development and whether it has appeared within the pre-determined time, and as a consequence, can request UCSA the states of other signals and communicate the possible identity of the drivers to be actuated. UCSA operates the actuation by sending suitable control signals to the periphery.

Chiefly at the beginning of a process, simultaneous actuation of a number of drivers may be requested (i.e. actuation of a plurality of devices within a very short time).

Since in this case the time taken for sending the individual messages from UCL1 to UCSA can exceed that admitted by the exchange for the actuation of said devices, UCL1 provides for the deferred actuation; that is UCL1 first communicates the identity of drivers to be actuated to UCSA, and then sends the actuation orders.

The results of the processing executed by UCL1 can be sent to higher hierarchy centre CE that in response will send UCL1 messages with requests for operations or with information required by UCL1 to intervene on the process through unit UCSA.

The described operations are carried out under the control of suitable programs that both for units UCSA and for unit UCL1 will have partly a general character and partly will depend on the particular application.

For units UCSA there are provided a program for the integration of the signals arriving from the sensors, which allows variation recognition as described, a program for the driver control and a program for the dialog with unit UCL1.

The way in which the periodicity of interrogation of the various sensors or of actuation of certain drivers is established will depend on the nature of the criteria to be picked up or returned and therefore on the particular application.

For unit UCL1, there is a part of the program specific to the application (subscriber's program), which is to process the information arriving from units UCSA, to generate commands directed towards said units and supply the results of the processing to higher hierarchy centre CE, and a general part, that manages the dialog between unit UCL1 and units UCSA, local terminal TL and higher hierarchy centre CE (programs for circuitry management), and supervises and checks the other programs.

An example of subscriber's program will be described hereinafter. The organization of general programs is shown in Fig. 4.

The programs are subdivided into modules, each associated with a suitable area of data memory ME3 and program memory ME4. Moreover common memory areas are provided which can be accessed by all the program modules to read or write data common to many modules or information directed to other modules.

The areas, common to all the programs are represented in bus form: bus 100 is the common memory bus on which all the common data and the information communicated from a module to another are present, while bus 101 is the "job buffer bus" for the requests for intervention of other program modules. The connections between program modules and bus 100 are represented by solid bidirectional arrows, for the access to the various common locations, and by hollow bidirectional arrows, representing data exchange.

The general part of the program comprises the following modules:

— module CLM, that manages the procedures of dialog on line 3 (Fig. 1) with higher hierarchy centre, by checking the parity, the formal character correctness, etc;
— a module GLS for driving modem MD1 for the transmission on line 3; the access of unit UCL1 to such line for the data transmission and reception occurs according to the "interrupt" procedure, i.e. it is the modem that communicates to UCL1 the presence of information intended for it and the availability of line 3;

— a module CM2 for each of the units UCSA connected to unit UCL1, for the management of the dialog between the two types of units on serial line 2. This management occurs at "interrupt for the transmission from UCSA to UCL1 and with procedure known as "sense line" for the transmission in opposite direction (that is the transceiver is interrogated to ascertain its availability, when unit UCL1 must transmit towards UCSA);

— a module GTR for the management of terminal TL, which basically controls the man-machine dialog through video display or teleprinter and the print out of particular information requested by other modules (for instance print out of information arriving from the higher hierarchy centre, requested by module GLM);

— a module SVS entrusted with the supervision of the other modules, e.g. with error analsyis, alarm management, etc;

— a module JCN (job control) that allows the dialog between, and the transfer of the operation control to, the various programs; this transfer occurs either upon a request mode through bus 101, or upon periodic scannings when there are no requests. The periodic scanning can involve just a few modules (namely GLS, SVS, CM2), and occurs through another bus 102, devoted to it.

For control transfer purposes, each program is called for by JCN by means of message containing the indication of the job to carry out, of the calling module and the address of possible additional information which may be of interest to the called program.

These indications are presented by JCN on bus 101, while the additional information are present on bus 100.

All information are supplied to JCN by the calling module, except of course the case of cyclical scanning, when they are generated by module JCN.

For a better understanding of the invention, reference is made to its application to the management of an artificial calling machine; that is a device which, under the control of the higher hierarchy centre or of an operator, effects test cycles on the local or trunk telephone connections, using lines devoted to this purpose in an exchange.

To describe this application, the tables of transition between the various phases of the subscriber's program of unit UCL1 are reported in tables 1 to 5. In these tables unit UCL1 is shown to receive signals of four types (program input): messages of sensor state variations coming from unit UCSA; sensors state messages, still coming from UCSA, but sent upon request of UCL1 whereas state variations are signalled on unit UCSA's initiative; messages from higher hierarchy centre CE and "time out" messages, which serve to control the exact time sequence of given operations.

As a consequence of the input signals and internal conditions of unit UCL1, internal operations can be started, and commands to UCSA or messages to higher hierarchy centre can be sent; afterwards the program passes to a subsequent phase.

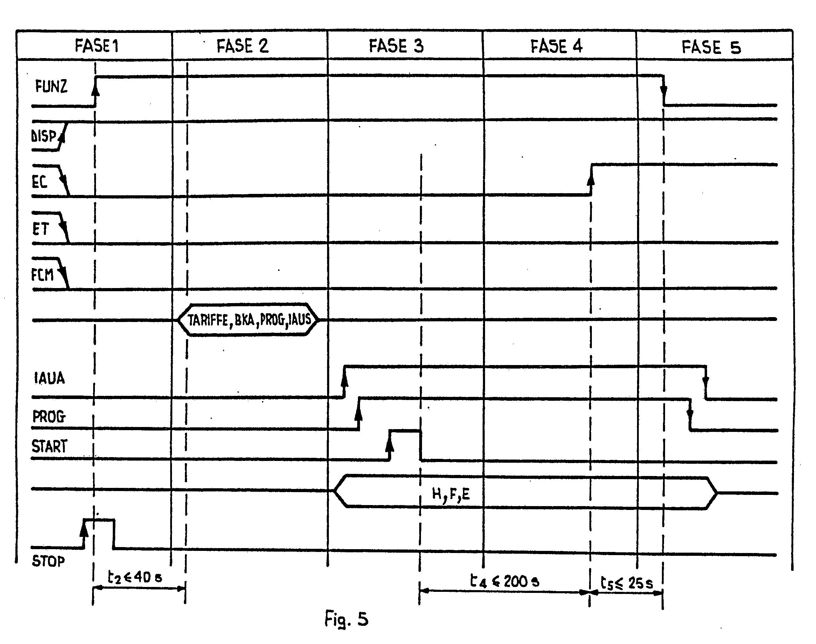

The main signals to be sensed (FUNZ, DISP, EC, ET, FCM, TARIFFE, BKA, PROG, IAUS) or driven (IAUA, PROG, START, H, F, E, STOP) are shown in Fig. 5, where subdivision into phases and the durations (t2, t4, t5) corresponding to a number of time meterings (time out 2, 4, 5) mentioned in the program are also indicated.

The meaning of the various signals is the following:

— FUNZ: signal that establishes the beginning and the end of the process, that is of the machine operation;

— DISP: signal that at high logic level ("1") indicates that the process can be supervised;

— EC: signal that passes to "1" to indicate the end of a test cycle,

— ET: signal that passes to "1" to indicate the end of a test in a cycle (the drawing refers to a cycle with a single test, therefore the return to 1 of ET is not meaningful since EC has already been returned to 1);

— FCM: this signal, when is at "0" at the same time as ET, indicates that the test has been successful; it is to be noted that the initial states of this signal and of signals DISP, EC, ET can be indifferently 1 or 0; the important feature is that when FUNZ passes to 1 they are in the conditions depicted in the drawing;

— TARIFFE (charge rates): signals indicating the rates by which a call ought to be charged, if said call were actual (i.e. from subscriber to subscriber);

— BKA: signal requiring test repetition;

— PROG: signal indicating the type of test to be executed;

— IAUS: signals indicating whether the test is to be entirely managed by the higher hierarchy centre or is to be started by the operator.

— IAUA: reciprocal signal of IAUS and signalling the machine whether the test is controlled by the higher hierarchy centre or by the operator;

— PROG: this signal communicates the machine the type of test preset;

— START: signal that actually starts a test;

— E: signal that indicates the correct setting (E=0) or not (E=1) of a test;

— F: signal that indicates that the program is at cycle end;

— H: this signal indicates the machine stop;

— STOP: this signal indicates the test stop.

Transition tables are self-explanatory.

It is worth noting that a further time metering (time out 3) is provided in the program, for measuring the time elapsed from the sending of a message from UCL1 to the higher hierarchy centre to the arrival of the reply thereof.

Moreover in phase 3 only the manual start (i.e. start carried out by the operator) of the calling machine has been investigated as only this kind of start is of interest for the operation of UCL1; in the list of the internal conditions relating to this phase, message $ME=\theta$ and indication Prog. 4 or 6 indicate the acceptance by the higher hierarchy centre of the choice of type of operation and of program effected by the operator. The non-considered operations are labelled with asterisks.

TABLE 1

| Present phase | Program input | Internal conditions | Internal operations | Output to UCSA | Information to higher hierarchy centre CE | Next phase |
|---|---|---|---|---|---|---|
| 1 | Passage to 1 of $\overline{\text{FUNZ}}$ $\overline{\text{FCM}}$, $\overline{\text{ET}}$, EC, FUNZ, DISP | — | Start Time Out 2; Set "manual start" flag. Reset driver replica. "Stop" or "cycle end" flag=0 | Request for state of sensors TARIFFE, BKA, PROG, IAUS | — | 2 |
| 1 | "Test start" message from CE | EC, $\overline{\text{FUNZ}}$, DISP. | Start Time Out 2; Set "automatic start" flag reset driver replica; "Stop" or "cycle end" flag=0 | Request for state of sensors TARIFFE, BKA, PROG, IAUS | — | 2 |
|  |  | ≠ | ERROR 1 | — | — | 1 |
| 1 | "Test stop" message from CE | EC, $\overline{\text{FUNZ}}$, DISP. | — | Request for immediate actuation of H; "STOP" pulse | — | 1 |
|  |  | ≠ | — | — | — | 1 |

TABLE 2

| Present phase | Program input | Internal conditions | Internal operations | Output to UCSA | Information to higher hierarchy centre CE | Next phase |
|---|---|---|---|---|---|---|
| 2 | Message from UCSA with states of sensors TARIFFE, BKA, PROG, IAUS | — | Tariff updating, start Time Out 3 | — | Information about type of program (PROG), type of start (manual, automatic), IAUS | 3 |
| 2 | Time Out 2 (40 sec) | — | ERROR 2 | — | — | 1 |

0 040 412

TABLE 3

| Present phase | Program input | Internal conditions | | | Internal operations | Output to UCSA | Information to higher hierarchy centre CE | Next phase |
|---|---|---|---|---|---|---|---|---|
| | | E=∅ { autom. start | | | * | * | — | * |
| | | | manual start { Programs 1 or 2 | | * | * | — | * |
| 3 | Message from CE with type of program to carry out, driver IAUA, driver E, operation mode MF | | | Prog. 4 or 6 { MF=∅ | Start Time Out 4, update type of program, operation mode | Request for actuation wires IAUA, PROG*, "START" pulse | — | 4 |
| | | | | MF=1 | * | * | * | * |
| | | E=1 | | | Stop Time Out 3 | Request for actuation of signal E. | — | 1 |
| 3 | Time Out 3 (15 sec) | | | | ERROR 3 | — | — | 1 |

## TABLE 4

| Present phase | Program input | Internal conditions | Internal operations | Output to UCSA | Information to higher hierarchy centre CE | Next phase |
|---|---|---|---|---|---|---|
| 4 | Passage of EC to 1 $\overline{FCM}$, $\overline{ET}$, EC FUNZ, DISP | — | Start Time Out 5 Set "Cycle end" flag. | — | — | 5 |
| 4 | Time Out 4 (200 sec) | — | ERROR 4 | — | — | 1 |

## TABLE 5

| Present phase | Program input | Internal conditions | Internal operations | Output to UCSA | Information to higher hierarchy centre CE | Next phase |
|---|---|---|---|---|---|---|
| 5 | Passage to 0 of FUNZ; $\overline{FUNZ}$, DISP | "Cycle end" flag=0 | Stop Time Out 5 | Request for reset of drivers PROG* IAUA, actuation of signal H | Information of "machine in stop" | 1 |
| | | "Cycle end" flag=1 | Set to 1 "cycle end" flag; Stop Time Out 5 | Request for reset of drivers PROG, IAUA; actuation of signal F | Information of "machine at cycle end" | 1 |
| 5 | Time Out 5 (25 sec) | — | ERROR 5 | — | — | 1 |

Claims

1. Intelligent and programmable peripheral equipment (UG1—UGm) for the asynchronous management of sensors and drivers (PE1—PEn) in a telecommunications network, which equipment

constitutes the two lower levels of a processing system organized in at least three hierarchical levels,
picks up from an exchange (CT) signals generated during the network operation and returns other signals to the exchange as a result of the processing of the signals picked up,
comprises a plurality of units of a first type (UCSA1 ... UCSAn) constituting the lowest hierarchical level, designed to manage a number of said sensors and drivers, and further comprises one or several units of a second type (UCL1) constituting the one but lowest hierarchical level, each second type unit being associated to the plurality of the first type units (UCSA1 ... UCSAn), following the development of the network operation on the basis of the data which were supplied by the first type units and represent state variations in the signals picked up from the exchange, and sending to the first type units data and commands relative to the driver actuation and to a higher-hierarchy processing centre (CE) through a serial line (3) to which second type units (UCL2 ... UCLm) of a plurality of similar equipments are connected the basic states of the network operation characterized in that each unit of the first type (UCSA1 ... UCSAn) is designated to manage its sensors and drivers by the following functions:
picking up signals from sets of the sensors at instants established by the unit itself and depending of the nature of the signals,
processing, in a given operation phase, only the signals actually of interest for that phase,
communicating to the second type unit (UCL1) the state variations of some of the signals picked up from the sensors, as soon as said variations are recognized, or the states of some of the signals picked up from the sensors upon request by the second type unit (UCL1), and sending control signals to individual drivers or sets of drivers upon information and/or commands arriving from the unit of the second type (UCL1); and that the unit of the second type (UCL1):
is designed to send to the first type units UCSA1 ... UCSAn) data and commands relating to the actuations, in dependence on messages coming from said higher hierarchy processing centre (CE) or the internal processing;
is connected to each of the first type units through a serial line (2-1 ... 2-n) allowing a full-duplex asynchronous communication between the two units: in the direction from the first type unit toward the second type unit "at interrupt", and in the opposite direction at "sense-line"; carries out the dialogue with the higher-hierarchy processing centre via the serial line (3) by a "polling-selection-procedure".

2. Equipment according to claim 1, characterized in that said units of the first type (UCSA1 ... UCSAn) are designed to sent to the drivers control signals for either the instantaneous or the deferred actuation.

3. Equipment according to claim 1, characterized in that said unit of the second type (UCL1) is associated with a local terminal (TL) for the direct dialog between an operator and the higher-hierarchy processing centre (CE) and for the transmission of commands and the request for states in real-time to the units of the first type (UCSA1 ... UCSAn).

4. Equipment according to claim 3, characterized in that said local terminal (TL) is connected to the unit of the second type (UCL1) through a serial line (4) that allows a full-duplex asynchronous communication between the two units with "sense-line" modalities.

**Patentansprüche**

1. Intelligente und programmierbare periphere Einrichtung (UG1—UGm) zum asynchronen Betreiben von Sensoren und Treibern (PE1—PEn) in einem Fernmeldenetz, wobei die periphere Einrichtung:

die beiden unteren Ebenen eines in wenigstens drei Rangordnungsebenen organisierten Verarbeitungssystems darstellt,
von einer Vermittlungsstelle (CT) Signale aufnimmt, die während des Betriebs des Fernmeldenetzes erzeugt werden, und an die Vermittlungsstelle andere Signale als Ergebnis der Verarbeitung der aufgenommenen Signale zurückgibt,
eine Anzahl von Einheiten einer ersten Art (UCSA1, ..., USCAn) umfaßt, die die unterste Rangordnungsebene bilden und dazu dienen, einige der Sensoren und Treiber zu betreiben,
und weiterhin eine oder mehrere Einheiten einer zweiten Art (UCL1) umfaßt, die die zweitunterste Rangordnungsebene bilden und von denen jede Einheit den Einheiten der ersten Art (UCSA1, ..., UCSAn) zugeordnet ist, die weiterhin der Entwicklung des Fernmeldenetzbetriebs auf der Grundlage der Daten folgen, die von den Einheiten der ersten Art geliefert werden und Zustandsänderungen in den von der Vermittlungsstelle aufgenommenen Signalen wiedergeben, die weiterhin zu den Einheiten der ersten Art Daten und Befehle senden, die sich auf die Betätigung der Treiber beziehen, und die an ein höherrangiges Verarbeitungszentrum (CE) über eine serielle Leitung (3), an die die Einheiten der zweiten Art (UCL2, . . ., UCLm) einer Vielzahl gleicher Einrichtungen angeschlossen sind, die Grundzustände des Fernmeldenetzbetriebs meldet,

dadurch gekennzeichnet, daß jede Einheit der ersten Art (UCSA1, . . ., UCSAn) aufgrund ihrer Bauart die Sensoren und Treiber durch die folgenden Funktionen betreibt:

Aufnehmen von Signalen von Gruppen der Sensoren zu Zeitpunkten, die durch die Einheit selbst festgelegt werden und von der Natur des Signals abhängen,
in einer gegebenen Betriebsphase, Verarbeiten nur des an dieser Phase tatsächlich beteiligten Signals,
Melden der Zustandsänderungen einiger der von den Sensoren aufgenommenen Signale an die Einheit der zweiten Art (UCL1), sobald diese Zustandsänderungen erkannt werden, oder der Zustände einiger der von den Sensoren aufgenommenen Signale auf Anforderung durch die Einheit des zweiten Typs (UCL1) hin, und
Senden von Steuersignalen an einzelne Treiber oder Gruppen der Treiber auf Information und/oder Befehle hin, die von der Einheit der zweiten Art (UCL1) eintreffen; und daß die Einheit der zweiten Art (UCL1):
gemäß ihrer Bauart an die Einheiten der ersten Art (UCSA1, . . ., UCSAn) in Abhängigkeit von Nachrichten, die vom höherrangigen Verarbeitungszentrum (CE) oder der internen Datenverarbeitung kommen, auf die Betätigungen bezogene Daten und Befehle sendet;
mit jeder der Einheiten der ersten Art über eine serielle Leitung (2-1, . . ., 2-n) verbunden ist, die eine asynchrone Voll-Duplex-Kommunikation zwischen den beiden Einheiten folgendermaßen erlaubt:
in Richtung von der Einheit der ersten Art zur Einheit der zweiten Art "bei Unterbrechung" ("at interrupt"), und in der entgegengesetzten Richtung auf "Leitungs-Abtastung" ("sense-line");
den Dialog mit dem höherrangigen Verarbeitungszentrum über die serielle Leitung (3) im "Aufrufbetrieb" ("polling-selection-procedure") durchführt.

2. Einrichtung nach Anspruch 1, dadurch gekennzeichnet, daß die Einheiten der ersten Art (UCSA1, . . ., UCSAn) an die Treiber Steuersignale entweder für sofortige oder für verzögerte Betätigung senden.

3. Einrichtung nach Anspruch 1, dadurch gekennzeichnet, daß der Einheit der zweiten Art (UCL1) ein örtliches Terminal (TL) für den direkten Dialog zwischen einem Operateur und dem höherrangigem Verarbeitungszentrum (CE) sowie für die Übertragung von Befehlen und der Anfrage nach Zuständen in Realzeit an die Einheiten der ersten Art (UCSA1, . . ., UCSAn) zugeordnet ist.

4. Einrichtung nach Anspruch 3, dadurch gekennzeichnet, daß das örtliche Terminal (TL) mit der Einheit der zweiten Art (UCL1) über eine serielle Leitung (4) verbunden ist, die eine asynchrone Voll-Duplex-Kommunikation zwischen den beiden Einheiten mit Modalitäten der Leitungs-Abtastung ("sense-line") ermöglicht.

**Revendications**

1. Equipement peripherique intelligent et programmable (UC1 . . . UCm) pour la gestion asynchrone de capteurs et d'organes de commande (PE1 . . . PEn) dans un réseau de télécommunication, qui

— constitue les deux niveaux inférieurs d'un système de traitement organisé en au moins trois niveaux hiérarchiques;
— saisit d'un central (CT) des signaux engendrés pendant le fonctionnement du réseau et restitue au central d'autres signaux comme résultat du traitement des signaux saisis;
— comprend une pluralité d'unites d'un premier type (UCSA1 . . . UCSAn), qui constituent le niveau hiérarchique le plus bas et sont destinées au contrôle d'un certain nombre desdits capteurs et organes de commande;
— et comprend en outre une ou plusieurs unités d'un deuxième type (UCL1) constituant le niveau hiérarchique immédiatement supérieur au niveau le plus bas, chaque unité du deuxième type étant associée à la pluralité d'unités du premier type (UCSA1 . . . UCSAn), étant destinée à suivre le développement du fonctionnement du réseau en utilisant les données fournies par les unités du premier type et représentant des variations d'état dans les signaux saisis du central, et envoyant des données et des commandes relatives aux activations des organes de commande aux unités du premier type, et les états essentiels du fonctionnement du réseau à un centre de traitement de niveau hiérarchique supérieur (CE), au moyen d'une ligne sérielle (3) à laquelle sont connectées les unités du deuxième type (UCL2 . . . UCLm) d'une pluralité d'équipements analogues; caractérisé en ce que chaque unité du premier type (UCSA1 . . . UCSAn) est destinée à contrôler ses capteurs et organes de commande au moyen des fonctions suivantes;
— saisir des signaux de groupes de capteurs en des instants déterminés par l'unité elle-même d'après la nature des signaux;
— traiter, dans une certaine phase de travail, seulement les signaux d'intérêt effectif pour cette phase;
— communiquer à l'unité du deuxième type (UCL1) les variations d'état de certains signaux prélevés des capteurs, dès qu'elles sont reconnues, ou l'état d'un certain nombre de signaux prélevés des capteurs, d'après la requête faite par l'unité du deuxième type (UCL1); et

— envoyer des signaux de commande à des organes de commande individuels ou à des groupes d'organes de commande, sur la base d'information et/ou commandes provenant de l'unité du deuxième type (UCL1); caractérisé aussi en ce que l'unité de deuxième type (UCL1):

— est destinée à envoyer aux unités du premier type (UCSA1 ... UCSAn) des données et des commandes concernant les activations, sur la base de messages provenant du centre de niveau hiérarchique supérieur (CE) ou des traitements effectués;

— est connectée à chaque unité du premier type (UCSA1 ... UCSAn) par l'intermédiaire d'une ligne sérielle (2-1 ... 2-n), qui permet un dialogue en full-duplex de façon asynchrone, en interruption dans le sens de l'unité du premier type vers l'unité du deuxième type, et à exploration de ligne dans le sens opposé;

— dialogue avec le centre de niveau hiérarchique supérieur, par l'intermédiaire de la ligne sérielle (3), suivant un procéde d'interrogation et sélection.

2. Equipement suivant la revendication 1, caractérisé en ce que les unités du premier type (UCSA1 ... UCSAn) sont destinées à envoyer aux organes de commande des signaux de commande pour l'activation soit immédiate soit différée.

3. Equipement suivant la revendication 1, caractérisé en ce que ladite unité du deuxième type (UCL1) est associée à un terminal local (TL), pour le dialogue direct entre un opérateur et le centre de niveau hiérarchique supérieur (CE) et pour l'envoi de commandes et la requête d'états en temps réel aux unités du premier type (UCSA1 ... UCSAn).

4. Equipement suivant la revendication 3, caractérisé en ce que ledit terminal local (TL) est connecté à l'unité du deuxième type (UCL1) à l'aide d'une ligne sérielle (4), qui permet un dialogue en full-duplex de façon asynchrone entre les deux unités, suivant des modalités d'exploration de la ligne.

Fig. 1

0 040 412

Fig.2

Fig.3

UCL1

0 040 412

3

Fig.4

Fig. 5